# EUROPÄISCHE PATENTANMELDUNG

(11) **EP 1 195 663 A2**
(43) Veröffentlichungstag der Anmeldung: **10.04.2002**
(21) Anmeldenummer: 01124058.7
(22) Anmeldetag: 09.10.2001
(51) Int. Cl.: G05B 19/042

(54) **Programmiergerät**

(30) Priorität: 09.10.2000 DE 10049857
(71) Anmelder: SIEMENS AKTIENGESELLSCHAFT, 80333 München (DE)
(72) Erfinder: Abert, Michael, 76474 Au (DE)

(57) **Zusammenfassung**

Um in einem Automatisierungsgerät eine Wartungsanalyse zu vereinfachen, weist ein Programmiergerät Mittel auf, welche eine Projektierung von Wartungsparametern für Aktoren und/oder für Sensoren und/oder für mechanische und/oder elektromechanische Lasten ermöglichen. Dabei werden die Projektierungsdaten der projektierten Wartungsparameter in das Steuerprogramm eingebunden, welches zum Steuern eines technischen Prozesses vorgesehen ist.

## Beschreibung

Die Erfindung betrifft ein Programmiergerät mit einem Software-Werkzeug zur Formulierung einer zu lösenden Automatisierungsaufgabe in Form einer Programmiersprache für Automatisierungsgeräte, insbesondere einer Programmiersprache, welche eine Darstellung einer Funktionsplangraphik und/oder einer Anweisungsliste und/oder eines Kontaktplanes auf einer Anzeigeeinheit ermöglicht, wobei das Software-Werkzeug aus der formulierten Automatisierungsaufgabe ein auf einem Automatisierungsgerät ablauffähiges Steuerprogramm zum Steuern eines technischen Prozesses erzeugt. Darüber hinaus betrifft die Erfindung ein Automatisierungsgerät, dem durch ein Programmiergerät ein auf dem Automatisierungsgerät ablauffähiges Steuerprogramm übertragbar ist, welches zum Steuern eines technischen Prozesses vorgesehen ist.

Ein derartiges Programmiergerät ist aus der WO 99/01803 bekannt. Dort erstellt ein Anwender mit einer Programmiersprache zusätzlich zur Formulierung der Automatisierungsaufgabe auch die Art und Weise der Prozessüberwachung. Sowohl der derart formulierte Programmteil zur Prozessüberwachung als auch der derart formulierte Programmteil zum Automatisieren sind Bestandteile eines Anwenderprogramms, welches mit einem geeigneten Compiler übersetzt und schließlich in Form eines in einem Automatisierungsgerät ablauffähigen Steuerprogramms in dieses übertragbar ist. Darüber hinaus weist das Programmiergerät Mittel auf, welche eine Prozessfehleranalyse eines zu steuernden technischen Prozesses vereinfachen. Maßnahmen zur Überwachung insbesondere von Aktoren und Sensoren im Hinblick auf ihre Belastung im Betrieb und im Hinblick auf eine vordefinierte Betriebsdauer sind nicht vorgesehen.

Der vorliegenden Erfindung liegt daher die Aufgabe zugrunde, ein Programmiergerät der eingangs genannten Art zu schaffen, welches in einem Automatisierungsgerät eine Wartungsanalyse vereinfacht.
Darüber hinaus ist ein Automatisierungsgerät anzugeben, welches für eine Wartungsanalyse geeignet ist.

Im Hinblick auf das Programmiergerät wird diese Aufgabe durch die im kennzeichnenden Teil des Anspruchs 1 angegebenen Maßnahmen gelöst; im Hinblick auf das Automatisierungsgerät weist dieses die im Anspruch 5 angegebenen Maßnahmen auf.

Die Erfindung ermöglicht insbesondere die Einbindung von Wartungsplänen und Wartungsaktivitäten für Aktoren und/oder Sensoren sowie für sämtliche an ein Automatisierungsgerät anschließbare mechanische und/oder elektromechanische Lasten in das Steuerprogramm. Die Einbindung dieser Wartungspläne und der Wartungsaktivitäten erfolgt auf einfache interaktive Weise während der Projektierungsphase des Automatisierungsgerätes. Die in der Projektierungsphase festgelegten Wartungsparameter werden mit einem geeigneten Compiler automatisch in das eigentliche Steuerprogramm eingebunden, wobei während der Echtzeitverarbeitung des Steuerprogramms die überwachten Aktoren und/oder Sensoren und/oder mechanischen und/oder elektromechanischen Lasten im Hinblick auf ihre Belastung während des Betriebs und im Hinblick auf eine vordefinierte Betriebsdauer überwacht werden.

Während einer Projektierungsphase wird z. B. festgelegt, nach wie viel Pegelwechseln ein binärer Aktor, welcher während des Steuerbetriebs einen Signalwechsel von "0" nach "1" ausgibt, ausgewechselt und durch einen Ersatz-Aktor ersetzt werden soll. Während des Steuerbetriebs inkrementiert das Programm im "Hintergrund" einen Schaltspielzähler für diesen Aktor und vergleicht den aktuellen Zählerstand mit einer während der Projektierungsphase angegebenen Obergrenze. Falls diese Obergrenze erreicht wird, löst das Automatisierungsgerät einen Wartungsalarm aus und schaltet auf einen Ersatz-Aktor um.

Ferner ist es beispielsweise möglich, an Stellantrieben und Schiebern die Betätigungspausen zu überwachen. Dies ist erforderlich, da bei diesen Stellantrieben und Schiebern, die über eine längere Zeitspanne nicht bewegt werden, in einer rauen Prozessumgebung die Gefahr der Korrosion besteht, was zu Störungen des Betriebs führen kann. Für den Fall, dass während des Steuerbetriebs die in der Projektierungsphase festgelegte Betätigungspause, z. B. eine Betätigungspause von 100 Stunden, überschritten wird, löst das Automatisierungsgerät während des Steuerbetriebs einen Zeitalarm aus, wodurch weitere geeignete Maßnahmen eingeleitet werden können.

Durch die Erfindung wird eine Wartung von automatisierungstechnischen Komponenten vereinfacht. Auf dezentrale, den automatisierungstechnischen Komponenten zugeordnete Überwachungseinrichtungen, z. B. Überwachungseinrichtungen in Form von Betriebsstundenzählern, kann verzichtet werden.

Durch die Ausgestaltungen der Erfindung gemäß den in den Ansprüchen 2 und 3 angegebenen Maßnahmen wird die Projektierung der Wartungsaktivitäten vereinfacht. Weitere vorteilhafte Ausgestaltungen der Erfindung ergeben sich aus den weiteren Unteransprüchen.

Anhand der Zeichnung, in der ein Ausführungsbeispiel der Erfindung veranschaulicht ist, werden die Erfindung, deren Ausgestaltungen sowie Vorteile näher erläutert.

Es zeigen
- Figur 1: Bestandteile eines Automatisierungssystems,
- Figur 2: eine Wartungs-Parametriermaske eines Projektierungs-Werkzeugs.

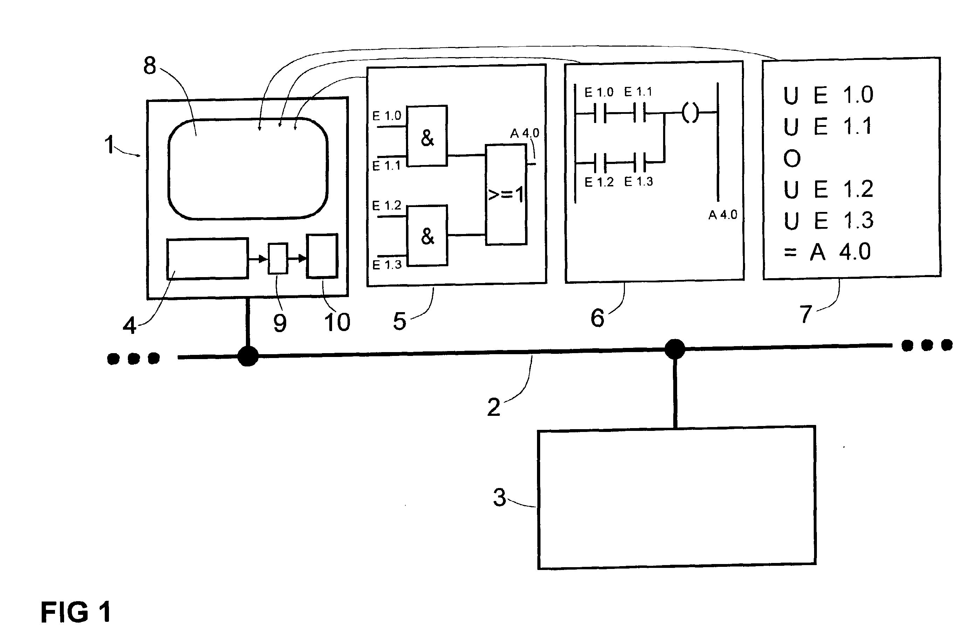

In Figur 1 ist mit 1 ein Programmiergerät bezeichnet, welches über einen Adress-, Daten- und Steuerleitungen aufweisenden Systembus 2 mit einem Automatisierungsgerät 3 verbunden ist. Weitere Bestandteile des Automatisierungssystems, z. B. Bedien- und Beobachtungsgeräte, Peripheriegeräte oder weitere Automatisierungsgeräte, sind der Einfachheit halber nicht dargestellt und zur Erläuterung der Erfindung nicht erforderlich. Das Programmiergerät ist mit Mitteln 4 in Form eines hier nicht dargestellten Prozessors, eines Speichers und eines Software-Werkzeuges versehen, die zur Formulierung einer zu lösenden Automatisierungsaufgabe in Form einer Programmiersprache vorgesehen sind. Gewöhnlich dient zur Formulierung einer Automatisierungsaufgabe eine Programmiersprache, welche die Darstellung eines Anwenderprogramms in einer so genannten Funktionsplandarstellung 5 und/oder in einer so genannten Kontaktplandarstellung 6 und/oder in einer so genannten Anweisungsliste 7 ermöglicht. Die Funktionsplangraphik 5, der Kontaktplan 6 und die Anweisungsliste 7 sind auf einer Anzeigeeinheit 8 des Programmiergeräts 1 darstellbar, wobei die Mittel 4 des Programmiergerätes 1 die derart formulierte Automatisierungsaufgabe in ein geeignetes Steuerprogramm übersetzen und über den Systembus 2 in einen Speicher des Automatisierungsgerätes 3 online übertragen. Die Übertragung kann selbstverständlich auch offline mit einem geeigneten Datenträger erfolgen, auf welchem das Steuerprogramm hinterlegbar ist, der in ein Datenträger-Laufwerk des Automatisierungsgerätes 3 einlegbar ist und von welchem das Automatisierungsgerät 3 das Steuerprogramm einliest. Das auf dem Automatisierungsgerät 3 ablauffähige Steuerprogramm ist zum Steuern eines technischen Prozesses vorgesehen, wobei entsprechende Funktionsbaugruppen im Automatisierungsgerät, geeignete Sensoren und/oder Aktoren sowie Stellglieder nach Maßgabe des Steuerprogramms auf den technischen Prozess einwirken.
Das Programmiergerät 1 weist ferner ein Wartungsprojektierungs-Werkzeug 10 auf, welches über eine Kopplungs- und Verknüpfungs-Einheit 9 mit den Mitteln 4 verbunden ist. Die Kopplungs- und Verknüpfungs-Einheit 9 und das Wartungsprojektierungs-Werkzeug 10 können selbstverständlich Bestandteile der Mittel 4 des Programmiergerätes 1 sein. Die Kopplungs- und Verknüpfungs-Einheit 9 ermöglichen einem Anwender, Projektierungsdaten der projektierten Wartungsparameter mit den Steuerdaten zu verknüpfen, die aufgrund der mit der Programmiersprache formulierten Automatisierungsaufgabe erzeugt werden. Dadurch wird ermöglicht, dass diese Projektierungsdaten zusammen mit den eigentlichen Steuerdaten zur Steuerung des technischen Prozesses mit den Mitteln 4 in das auf dem Automatisierungsgerät 3 ablauffähige Steuerprogramm übersetzt werden, was bedeutet, dass die Projektierungsdaten in das eigentliche zur Steuerung des technischen Prozesses erstellte Steuerprogramm eingebunden werden.

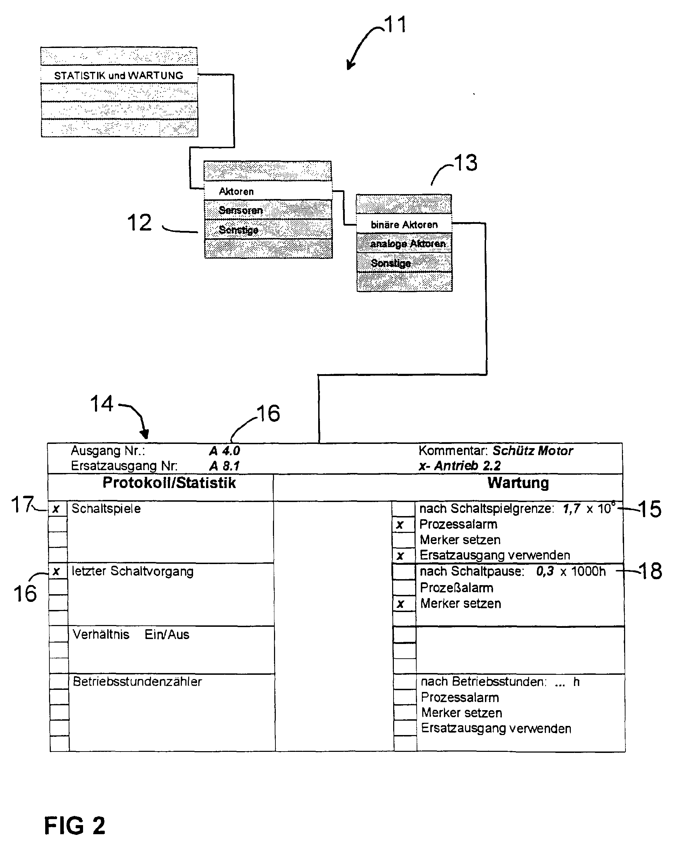

Im Folgenden wird auf Figur 2 verwiesen, in welcher eine Wartungs-Parametriermaske eines Projektierungs-Werkzeugs dargestellt ist.
Es ist angenommen, dass ein binärer Aktor, der über den Ausgang A 4.0 (Figur 1) angesteuert wird, auf die Anzahl seiner Schaltspiele, d. h. auf die Anzahl seiner Pegelwechsel während der Steuerung eines technischen Prozesses, zu überwachen ist. Es ist weiter angenommen, dass nach Erreichen von 1,7 Millionen Pegelwechseln ein Alarm ausgelöst und auf einen binären Ersatz-Aktor umgeschaltet werden soll, der an einem Ausgang A 8.1 angeschlossen ist. Ferner ist dieser binäre Aktor auf eine maximale Schaltpause von 300 Stunden zu überwachen, wobei für den Fall, dass diese Schaltpause während des Betriebs überschritten wird, ein Merker zu setzen ist, welcher zu einer statistischen Auswertung vorgesehen ist. Dazu startet ein Anwender auf dem Programmiergerät 1 (Figur 1) zunächst das Wartungsprojektierungs-Werkzeug 10, wodurch eine Bildschirmmaske 11 auf der Anzeigeeinheit 8 dargestellt wird. In einem Verzeichnis 12 werden dem Anwender sämtliche an dem Automatisierungsgerät 3 angeschlossenen automatisierungstechnischen Komponenten angezeigt. Im vorliegenden Beispiel werden "Aktoren", "Sensoren" sowie weitere unter der Kennzeichnung "Sonstige" an das Automatisierungsgerät 3 angeschlossene Komponenten angezeigt, wobei durch den Anwender über Bedienmittel des Programmiergerätes 1, z. B. über ein Bedienmittel in Form einer so genannten "Maus", ein Feld "Aktoren" im Verzeichnis 12 auswählbar ist. Wählt der Anwender dieses Feld aus, bewirkt dies, dass ein weiteres diesen Aktoren zugeordnetes Verzeichnis 13 auf der Anzeigeeinheit 8 dargestellt wird, in welchem sämtliche an das Automatisierungsgerät angeschlossene Aktoren angezeigt werden. Nach Auswahl eines Feldes "binäre Aktoren" im Verzeichnis 13 erscheint auf der Anzeigeeinheit 8 eine diesem binären Aktor zugeordnete Wartungsmaske 14, in welcher verschiedene für diesen binären Aktor relevante Wartungsparameter enthalten sind. Entsprechend den eingangs festgelegten Vorgaben wählt der Anwender in dieser Maske 14 ein Feld "Schaltspiele" aus, trägt die Anzahl der Schaltspiele, im vorliegenden Beispiel die Anzahl 1,7 Millionen, in ein dazu vorgesehenes Feld 15 ein. Entsprechend den Vorgaben ist zusätzlich das Feld "Prozessalarm" und das Feld "Ersatzausgang" anzuwählen, wobei der Anwender den Ersatzausgang A 8.1 in das dazu vorgesehene Feld 16 einträgt. Selbstverständlich ist es möglich, diesen Ersatzausgang A 8.1 bereits während der Projektierungsphase des Automatisierungssystems dem Ausgang A 4.0 fest zuzuordnen, wodurch der Ersatzausgang A 8.1 bereits fest im Feld 15 der Wartungsmaske 14 hinterlegt ist.
Gemäß den eingangs formulierten Vorgaben wählt der Anwender ferner in der Wartungsmaske 14 ein Feld 17 "letzter Schaltvorgang" aus und trägt die gewünschte Überwachungszeit im Hinblick auf die Schaltpause von 300 Stunden in ein Feld 18 ein. Darüber hinaus wählt der Anwender das Feld "Merker" aus, wobei dieser Merker für eine statistische Auswertung vorgesehen ist.

Die Parametrierung ist nun abgeschlossen und das Wartungsprojektierungs-Werkzeug 10 erzeugt aus diesen Parametern die Projektierungsdaten, welche die Kopplungs- und Verknüpfungs-Einheit 9 mit den eigentlichen Steuerdaten zur Steuerung des technischen Prozesses verknüpft, die die Mittel 4 aus der mit einer Programmiersprache formulierten Automatisierungsaufgabe erzeugen. Schließlich übersetzen die Mittel 4 diese verknüpften Daten in ein auf dem Automatisierungsgerät 3 ablauffähiges Steuerprogramm, welches in dieses Automatisierungsgerät 3 online oder offline übertragbar ist. Dieses bearbeitet zur Steuerung des technischen Prozesses das Steuerprogramm, wobei das Automatisierungsgerät 3 mit Mitteln versehen ist, die während des Steuerbetriebs sowohl die parametrierten Schaltspiele als auch die parametrierte Schaltpause des binären Aktors erfassen. Für den Fall, dass die Schaltspiele den Wert von 1,7 Millionen übersteigen, erzeugt das Automatisierungsgerät 3 einen Prozessalarm und schaltet auf einen an das Automatisierungsgerät 3 angeschlossenen Ersatz-Aktor um. Für den Fall, dass die Schaltpause den Wert von 300 Stunden überschreitet, setzen die Mittel einen Merker, der für eine statistische Auswertung auf dem Programmiergerät 1 oder auf einem Bedien- und Beobachtungsgerät diesen Geräten übertragbar ist.

## Patentansprüche

1. Programmiergerät (1) mit einem Software-Werkzeug (4) zur Formulierung einer zu lösenden Automatisierungsaufgabe in Form einer Programmiersprache für Automatisierungsgeräte, insbesondere einer Programmiersprache, welche eine Darstellung einer Funktionsplangraphik (5) und/oder einer Anweisungsliste (7) und/oder eines Kontaktplanes (6) auf einer Anzeigeeinheit (8) ermöglicht, wobei das Software-Werkzeug (4) aus der formulierten Automatisierungsaufgabe ein auf einem Automatisierungsgerät (3) ablauffähiges Steuerprogramm zum Steuern eines technischen Prozesses erzeugt,
**dadurch gekennzeichnet,**
- **dass** das Programmiergerät (1) ferner ein Wartungsprojektierungs-Werkzeug (10) aufweist, welches eine Projektierung von Wartungsparametern für Aktoren und/oder für Sensoren und/oder für mechanische und/oder elektromechanische Lasten ermöglicht und welches aus den projektierten Wartungsparametern entsprechende Projektierungsdaten erzeugt,
- **dass** das Programmiergerät (1) mit Mitteln (9) versehen ist, welche die Projektierungsdaten der projektierten Wartungsparameter in das Steuerprogramm einbinden.

2. Programmiergerät nach Anspruch 1, **dadurch gekennzeichnet, dass** die Projektierung der Wartungsparameter menügesteuert ist.

3. Programmiergerät nach Anspruch 2, dadurch "**gekennzeichnet**, dass die Wartungsparameter für jeden Aktor und/oder für jeden Sensor und/oder für jede mechanische und/oder elektromechanische Last durch Einträge in **gekennzeichneten** Feldern von Projektierungs-Masken festlegbar sind.

4. Programmiergerät nach einem der Ansprüche 1 bis 3, **dadurch gekennzeichnet, dass** die Mittel Bestandteil des Software-Werkzeugs (4) sind.

5. Automatisierungsgerät, dem durch ein Programmiergerät nach einem der Ansprüche 1 bis 4 ein auf dem Automatisierungsgerät ablauffähiges Steuerprogramm übertragbar ist, welches zum Steuern eines technischen Prozesses vorgesehen ist, wobei das Steuerprogramm Mittel umfasst, die zur Analyse von Wartungsparametern für Aktoren und/oder für Sensoren und/oder für mechanische und/oder elektromechanische Lasten vorgesehen sind, wobei
- das Automatisierungsgerät mit Mitteln versehen ist, die während des Steuerbetriebs die Wartungsparameter der Aktoren und/oder der Sensoren und/oder der mechanischen und/oder elektromechanischen Lasten erfassen und mit den durch das Projektierungs-Werkzeug projektierten Wartungsparametern vergleichen,
- die Mittel im Falle eines Überschreitens des Vergleichswertes mit einem vorgebbaren Wert eine Meldung erzeugen.

6. Automatisierungsgerät nach Anspruch 5, **dadurch gekennzeichnet, dass** im Falle des Überschreitens des Vergleichswertes mit dem vorgebbaren Wert der Steuerbetrieb mit einem dem Aktor zugeordneten Ersatz-Aktor und/oder einem dem Sensor zugeordneten Ersatz-Sensor und/oder einer der mechanischen und/oder elektromechanischen Last zugeordneten ErsatzLast fortsetzbar ist.
